# EUROPEAN PATENT APPLICATION

(11) **EP 4 715 420 A1**
(43) Date of publication of application: **25.03.2026**
(21) Application number: 24205732.1
(22) Date of filing: 10.10.2024
(51) Int. Cl.: G01S 7/02, G01S 13/34, G01S 13/87, G01S 13/931

(54) **INTER-CHIRP TIME SYNCHRONIZATION FOR EFFICIENT FREQUENCY ALLOCATION**

(30) Priority: 20.09.2024 US 202418891792
(71) Applicant: Aptiv Technologies AG, 8200 Schaffhausen (CH)
(72) Inventor: GAO, Boyi, Westfield, IN, 46074 (US); SEARCY, James F., Westfield, IN, 46074 (US); DILSAVER, Benjamin W., Russiaville, IN, 46979 (US)
(74) Representative: Manitz Finsterwald Patent- und Rechtsanwaltspartnerschaft mbB

(57) **Abstract**

A radar system for a vehicle includes a first radar sensor and a second radar sensor, both configured to transmit and receive radar signals in the same frame. A processor system, coupled to these sensors, transmits a first set of chirps from the first radar sensor and a second set of chirps from the second radar sensor. Each chirp has specific start and end times, and frequency bands, with differing frequency ranges. The chirps from the two sensors are interleaved such that the start frequency of the second sensor's chirps lies between the start and end frequencies of the first sensor's chirps, and the end frequency of the first sensor's chirps lies between the start and end frequencies of the second sensor's chirps. Additionally, each chirp from the first sensor overlaps in time with at least a portion of the chirps from the second sensor.

## Description

### FIELD

The present disclosure relates to radar systems and methods and, more particularly, to radar systems and methods directed to efficient frequency allocation in vehicle sensing systems.

### BACKGROUND

This section provides background information related to the present disclosure which is not necessarily prior art.

Automotive radar sensors are used in vehicle sensing systems to determine information about objects in the environment of the vehicle, such as the location, size, orientation, velocity, and acceleration of objects in the environment of the vehicle. The sensed information can, for example, be used by other vehicle systems, such as autonomous driving systems and/or advanced driver assistance systems (ADAS), etc., to control steering, braking, throttle, and/or other vehicle systems.

A radar system may transmit a number of radar chirps within a particular transmit frame and then receive signals corresponding to the transmitted chirps within the transmit frame reflected from an object within the environment of the vehicle. The frequency of the radar signal may vary during each individual chirp. For example, in some radar systems the transmitted signal may start at an initial frequency and then increase or decrease over the time period of the chirp to an end frequency. In some conventional radar systems, the initial frequency and the end frequency of each chirp can stay the same for each chirp over the course of the transmit frame. Other radar systems, however, may utilize a stepped frequency waveform such that the initial frequencies and end frequencies of the transmitted signals change from chirp to chirp. For example, a radar system may utilize a step-down frequency waveform such that the initial frequency and end frequency of each subsequent chirp is lower than the initial frequency and end frequency of the previous chirp. Alternatively, a radar system may utilize a step-up frequency waveform such that the initial frequency and end frequency of each subsequent chirp is higher than the initial frequency and end frequency of the previous chirp.

Additionally, in some radar systems, multiple radar sensors are deployed to enhance the sensing capabilities and provide comprehensive coverage of the vehicle's surroundings. As the number of radar sensors in vehicles increases, the potential for interference between these sensors also rises. Each radar sensor transmits and receives signals within overlapping frequency ranges. To avoid to potential signal interference, prior systems transmit signals from the different radar sensors at separate non-overlapping time intervals so that reflected signals from a first radar sensor are received before the second radar sensor begins transmitting radar signals so as to avoid interference that can degrade the quality and reliability of the radar data and negatively impact the performance of other vehicle systems that rely on accurate and timely information.

There is a need for an advanced radar system that can synchronize the operation of multiple radar sensors with high precision to reduce interference and enhance the accuracy and reliability of the sensed information.

### SUMMARY

This section provides a general summary of the disclosure and is not a comprehensive disclosure of its full scope or all of its features.

In accordance with the present disclosure, a radar system for a vehicle including a first radar sensor configured to transmit and receive a first radar signal in a frame, a second radar sensor configured to transmit and receive a second radar signal in the same frame as the first radar signal, a processor system coupled to the first and second radar sensor and configured to: transmit a first plurality of chirps by the first radar sensor and a second plurality of chirps by the second radar sensor, each chirp having a chirp start time, a chirp end time, and a chirp frequency band with a chirp start frequency and a chirp end frequency, wherein each chirp has a different frequency band, and wherein the first plurality of chirps are interleaved with the second plurality of chirps such that for each chirp within the frame: the chirp start frequency of each of the second plurality of chirps is between the chirp start frequency and chirp end frequency of each of the first plurality of chirps from the first radar, the chirp end frequency of each of the first plurality of chirps is between the chirp start frequency and chirp end frequency of each of the second plurality of chirps, and at least a portion of each of the first plurality of chirps is within the same time slot as the second plurality of chirps.

In other features, the timing of the first radar sensor and the second radar sensor is synchronized.

In other features, the timing of the first radar sensor and the second radar sensor are determined by a timing control mechanism employing Generalized Precision Time Protocol (gPTP) to synchronize the transmission timing of the first plurality of chirps and the second plurality of chirps.

In other features, the first radar signal and second radar signal have the same intermediate frequency.

In other features, the first radar signal and second radar signal further comprise a stepped frequency pulse waveform characterized by a series of pulses, each pulse having a frequency incrementally different from the preceding pulse to cover a predetermined frequency band.

In other features, the timing control mechanism maintains a clock accuracy of <1 microsecond between the first radar sensor and the second radar sensor.

In accordance with the present disclosure, a method of operating a radar system of a vehicle , including transmitting a first plurality of chirps by a first radar and a second plurality of chirps by a second radar sensor, each chirp having a chirp start time, a chirp end time, and a chirp frequency band with a chirp start frequency and a chirp end frequency, wherein each chirp has a different frequency band, and wherein the first plurality of chirps are interleaved with the second plurality of chirps such that for each chirp within the frame, the chirp start frequency of each of the second plurality of chirps is between the chirp start frequency and chirp end frequency of each of the first plurality of chirps from the first radar, the chirp end frequency of each of the first plurality of chirps is between the chirp start frequency and chirp end frequency of each of the second plurality of chirps, and at least a portion of each of the first plurality of chirps is within the same time slot as the second plurality of chirps.

In other features, the timing of the first radar sensor and the second radar sensor is synchronized.

In other features, the timing of the first radar sensor and the second radar sensor are determined by a timing control mechanism employing Generalized Precision Time Protocol (gPTP) to synchronize the transmission timing of the first plurality of chirps and the second plurality of chirps.

In other features, the first plurality of chirps and the second plurality of chirps have the same intermediate frequency.

In other features, the first plurality of chirps and the second plurality of chirps further comprise a stepped frequency pulse waveform characterized by a series of pulses, each pulse having a frequency incrementally different from the preceding pulse to cover a predetermined frequency band.

In other features, the timing control mechanism maintains a clock accuracy of <1 microsecond between the first radar sensor and the second radar sensor.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is a block diagram of a vehicle having a radar system in accordance with the present disclosure;
FIG. 2 is another block diagram of a vehicle having a radar system in accordance with the present disclosure;
FIG. 3 is a graph of a frame including partially overlapping radar signal chirps in accordance with the present disclosure;
FIG. 4 is a graph of a frame including fully overlapping radar signal chirps in accordance with the present disclosure;
FIG. 5 is a detailed graph of the beginning of the frame according to the example of FIG. 3; and
FIG. 6 is a detailed graph of the beginning of the frame according to the example of FIG. 4.

Corresponding reference numerals indicate corresponding parts throughout the several views of the drawings.

### DETAILED DESCRIPTION

Example embodiments will now be described more fully with reference to the accompanying drawings.

The present disclosure is directed to radar systems having a plurality of radar sensors configured to transmit and receive a plurality of radar signals in a frame, such that the plurality of radar signals share the same frame. In addition, the radar sensors of the radar systems can transmit chirps, such that each chirp has a chirp start time, a chirp end time, and a chirp frequency band, and such that each chirp frequency band has a chirp start frequency and a chirp end frequency. Further, each chirp from one of the plurality of radar sensors may have a different frequency band from each chirp of the other radar sensors, and/or each chirp from one of the plurality of radar sensors may be interleaved with chirps from the other radar sensors. Additionally, within each frame, the start frequency of the chirps from one radar sensor may lie between the start and end frequencies of the chirps from another radar sensor, and vice versa for the end frequencies. This interleaving allows for at least a portion of the chirps from each radar sensor to occupy the same time slots, improving the ability of the system to detect and analyze objects within the vehicle's surroundings.

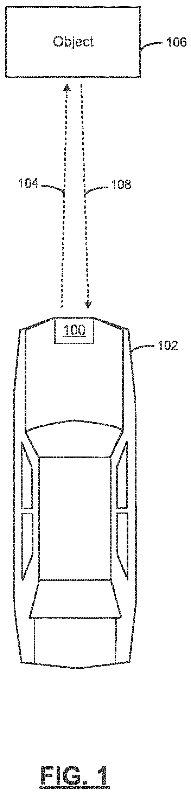

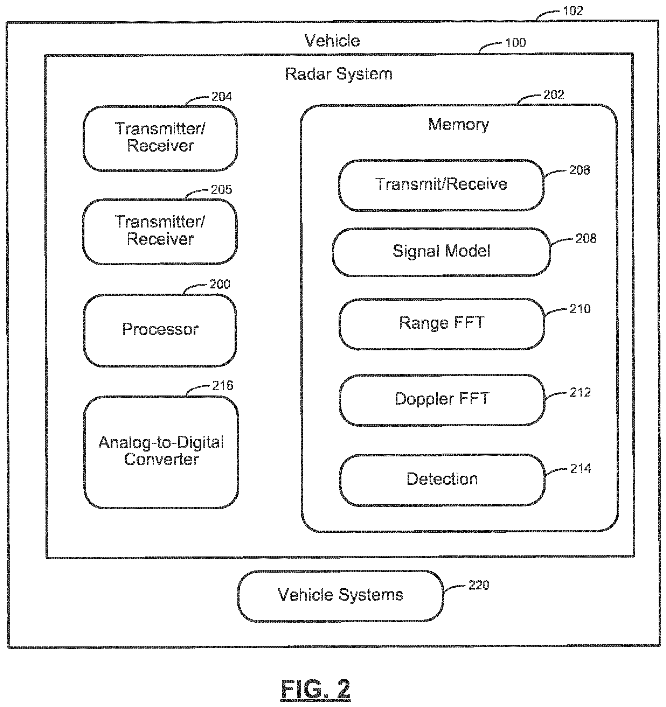

With reference to FIGS. 1 and 2, a radar system 100 of a vehicle 102 in accordance with the present disclosure is shown. The radar system 100 transmits signals 104 that are reflected off of an object 106 in the environment of the vehicle 102. While a single object 106 is shown for purposes of illustration in FIG. 1, in practice the object 106 may comprise multiple objects. The radar system 100 receives signals 108 that are reflected from the object 106. Based on characteristics of the received signals 108, the radar system 100 determines information about the object, such as range and range rate, which is subsequently used to determine the location, size, orientation, velocity and acceleration of the object 106.

The radar system 100 includes a processor 200 and memory 202 that stores code executed by the processor 200 to perform the required functionality for transmitting and receiving signals 104, 108 and determining information about the object 106 based on the characteristics of the received signals 108. While the example implementation illustrates a single processor 200, multiple processors and/or modules working together can alternatively be used. The radar system 100 includes a transmitter/receiver 204 that transmits and receives the signals 104, 108 using a stepped frequency pulse waveform. The transmitter/receiver 204 includes one or more transmit (Tx) antennas and one or more receive (Rx) antennas for transmitting and receiving signals 104, 108. The radar system 100 may further include a second transmitter/receiver 205 that may transmit and receive additional signals. The processor 200, for example, executes transmit/receive code 206 stored in memory 202 to transmit and receive the signals 104, 108. In another example, the processor 200 may coordinate the operation of both transmitter/receivers 204, 205. The memory 202 also stores information for a signal model 208. The memory 202 also stores code 210 used by the processor 200 to perform a range FFT and code 212 for performing a Doppler FFT on received radar signals 108 using the signal model 208. As discussed in further detail below, the processor 200 determines range and range-rate information about the object 106 based on performing the range FFT and Doppler FFT on the received radar signals 108, respectively. For example, the processor 200 performs range FFT using the range FFT code 210 to generate a range index and performs Doppler FFT using the Doppler FFT code 212 to generate a Doppler index. The processor 200 then uses the signal model 208 to process the range and Doppler indexes to determine the range and range rate, respectively. In addition, the memory 202 also stores code 214 used by the processor 200 to perform object detection to determine information about the object 106 based on the determined range and range-rate information. The processor 200 can then communicate the information about the object 106, such as the location, size, orientation, velocity and acceleration of the object 106 determined based on the range and range-rate information, to other vehicle systems 220, such as autonomous driving systems and/or advanced driver assistance systems (ADAS), etc. The other vehicle systems 220 can then utilize and process the information about the object 106 to appropriately control steering, braking, throttle, and/or other vehicle operations of the vehicle 102 and/or to generate alerts, notifications, and/or warnings to a driver of the vehicle 102 based on the information about the object 106.

The radar system 100 also includes an analog-to-digital converter 216 used to sample the received radar signal 108 using a specified sample rate and to convert analog information about the received radar signals, such as a receive frequency, to a digital format. The analog-to-digital converter 216 is also referred to as ADC 216. The ADC 216 can be implemented using a separate processor, multiple processors, and/or module configured to perform analog-to-digital radar signal processing in accordance with the present disclosure.

The processor 200 can control and coordinate the transmitter/receivers 204, 205, or radar sensors, to transmit and receive radar signals 104, or chirps, within a shared time frame. The timing of the chirps 104 from both the first and second radar sensors 204, 205 may be synchronized to ensure minimal interference and efficient use of the bandwidth range occupied by each radar sensor 204, 205 while accounting for a predetermined maximum time delay. This synchronization may be achieved using a timing control mechanism that employs the Generalized Precision Time Protocol (gPTP). gPTP is an extension of the Precision Time Protocol (PTP) defined in IEEE 802.1 AS, which ensures highly accurate time synchronization across networked systems. In this way, the radar system 100 can attain the precision necessary to align the transmission timings of the chirps from both radar sensors 204, 205 and maintain the intended interleaved pattern of chirp transmissions in accordance with the present disclosure by increasing clock accuracy into the sub-microsecond range.

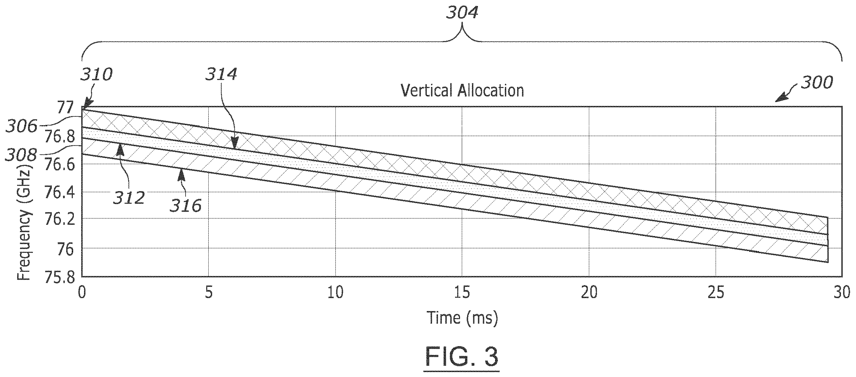

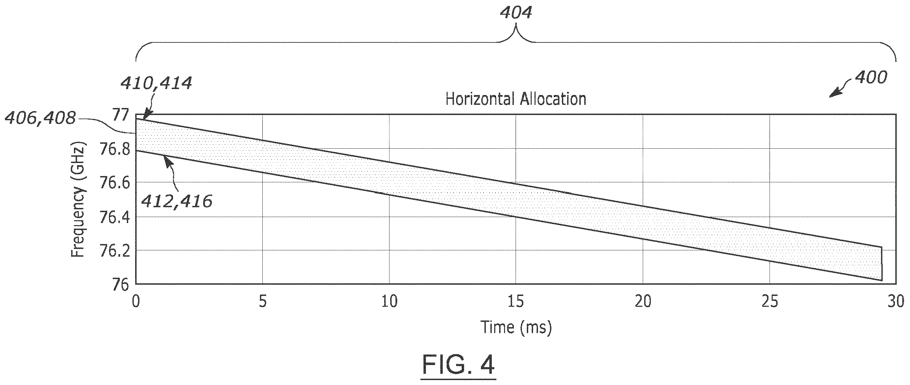

The processor 200 coordinates the radar sensors 204, 205 to transmit radar signals 104, or chirps, offset from each other at an intermediate frequency (IF). With reference to FIG. 3, for example, the first radar sensor 204 can transmit a chirp 306 having a first IF, while the second radar sensor 205 may transmit a chirp 308 having a second IF, the second IF being offset from the first IF such that the second IF does not interfere with the first IF. In another example, the processor 200 can coordinate the radar sensors 204, 205, to transmit chirps having the same intermediate frequency (IF). In this example, the first radar sensor 204 may transmit a chirp 306 having a first IF, while the second radar sensor 205 may transmit a chirp 308 having a second IF that is the same as the first IF, as discussed in further detail with reference to FIGS. 4-6 below.

With further reference to FIG. 3, graph 300 illustrate two partially overlapping radar signal chirps is shown. In the example of FIG. 3, a single frame 304 having a frame length of 30ms is shown for purposes of illustration, with time in milliseconds (ms) indicated along the horizontal axis and frequency in Gigahertz (GHz) shown along the vertical axis. While a single frame 304 is shown in FIG. 3, the radar system 100 is configured to transmit chirps and process received signals over multiple subsequent frames.

A first chirp 306 may be transmitted having a first start frequency 310 and first end frequency 312. A second chirp 308 may be transmitted having a second start frequency 314 and second end frequency 316. As shown in the example of FIG. 3, the first chirp 306 may partially overlap with the second chirp 308, such that the first end frequency 312 may overlap with the second start frequency 314 while neither the first start frequency 310 nor the second end frequency 316 overlap.

Referring now to FIG. 4, a graph 400 illustrating two fully overlapping radar signal chirps is shown. In the example of FIG. 4, as in FIG. 3, a single frame 404 having a frame length of 30ms is shown for purposes of illustration, with time in milliseconds (ms) indicated along the horizontal axis and frequency in Gigahertz (GHz) shown along the vertical axis. While a single frame 404 is shown in FIG. 4, the radar system 100 is configured to transmit chirps and process received signals over multiple subsequent frames.

A first chirp 406 may be transmitted having a first start frequency 410 and first end frequency 412. A second chirp 408 may be transmitted having a second start frequency 414 and second end frequency 416. As shown in the example of FIG. 4, the first chirp 406 may fully overlap with the second chirp 408, such that the first start frequency 410 may be the same as the second start frequency 414 and the first end frequency 412 may be the same as the second end frequency 416.

In the examples of FIGS. 3 and 4, the illustrated chirps are down-chirps wherein the start frequency and end frequency of each chirp is higher than the start frequency and end frequency of the next subsequent chirp. While FIGS. 3 and 4 illustrate partially and fulling overlapping down-chirps, respectively, up-chirps can alternatively be used wherein start frequency and end frequency of each chirp are lower than the next subsequent chirp so that the start frequency and end frequency of the chirps increase over the period of the frame.

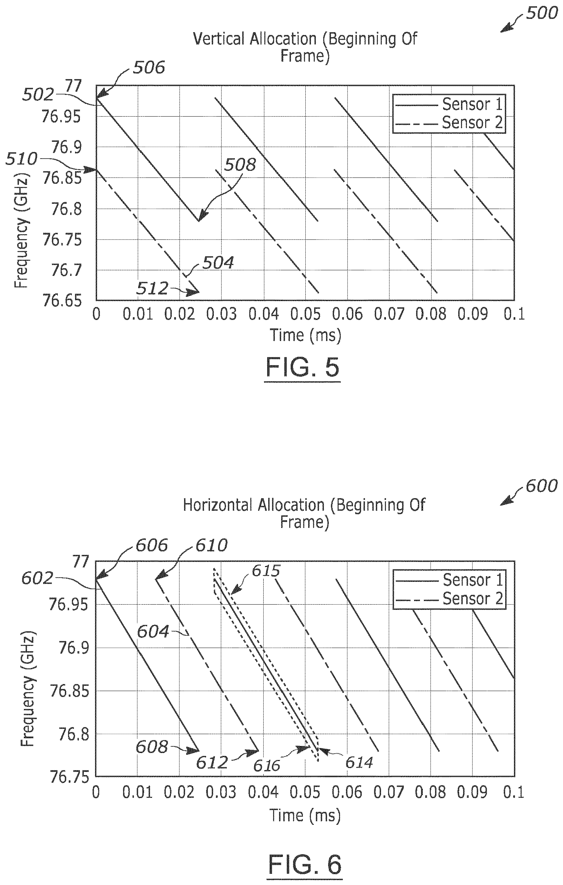

Referring now to FIG. 5, a detailed graph 500 illustrating the partially overlapping radar signal chirps of FIG. 3 is shown. FIG. 5 illustrates samples of the first chirp 306 and second chirp 308 at the beginning of the frame 304. As illustrated, a first chirp sample 502 and a second chirp sample 504 may begin at the same time (for example, 0 on the *Time (ms)* axis) and end at the same time. The first chirp sample 502 may have a start frequency 506 and end frequency 508 that is higher than the start frequency 510 and end frequency 512 of the second chirp sample 504, respectively. In this way, the first chirp 306 and the second chirp 308 may be transmitted simultaneously with a minimal frequency offset without interference.

Referring now to FIG. 6, a detailed graph 600 illustrating the fully overlapping radar signal chirps of FIG. 4 is shown. FIG. 6 illustrates samples of the first chirp 406 and second chirp 408 at the beginning of the frame 304. As illustrated, a first chirp sample 602 and a second chirp sample 604 may begin at different times and end at different times while the first chirp sample 602 and second chirp sample 604 may have the same start frequencies 606, 610 and the same end frequencies 608, 612. In this way, the first chirp 406 and second chirp 408 may be transmitted at different times using the same frequencies without interference.

FIG. 6 further illustrates an example IF bandwidth range of a chirp 614. As illustrated in FIG. 6, the IF bandwidth range of the chirp 614 includes a first bounding frequency 615 that is shifted in frequency above the chirp 614 and a second bounding frequency 616 that is shifted in frequency below the chirp 614. More specifically, the first bounding frequency 615 includes a frequency that is higher than the chirp 614 at the corresponding point in time. The second bounding frequency 616 includes a frequency that is lower than the chirp 614 at the corresponding point in time. The second bounding frequency 616 can be offset from the chirp 614 by the same amount such that the second bounding frequency 616 is shifted in frequency below the chirp 614 by the same frequency amount as the first bounding frequency 615 is shifted in frequency above the chirp 614. For example, an automotive radar system can transmit radar signals in the 77 Gigahertz (GHz) frequency band and can include a total frequency sweep of 250 Megahertz (MHz) between the start and end frequency for each chirp. In such case, the IF bandwidth range can be plus/minus 20 MHz, such that the first bounding frequency is 20 MHz above the chirp 614 at each corresponding point in time and the second bounding frequency is 20 MHz below the chirp 614 at each corresponding point in time. While these transmit frequencies, sweep ranges, and IF bandwidth range are provided as examples, any other suitable transmit frequencies, sweep ranges, and IF bandwidth range can be used in accordance with the present disclosure. Together, the first bounding frequency 615 and the second bounding frequency 616 define the IF bandwidth range surrounding the chirp 614. While the IF bandwidth range and first and second bounding frequencies 615, 616 are illustrated for chirp 614 as an example, it is understood that all of the chirps 602, 604, etc., have a similar IF bandwidth range with similar first and second bounding frequencies 615, 616. In addition, while the IF bandwidth range and first and second bounding frequencies 615, 616 are described in this example while referring to FIG. 6, it is understood that chirp samples 502 and 504, and the other illustrated chirps of FIG 5, have similar IF bandwidth ranges with similar bounding frequencies. To ensure that the chirp 614 is not interfered with by other transmitted chirps from other radar sensors, the system ensures that a reflected signal from of a previously transmitted chirp, such as chirp 604, is not received within the frequency-time spectrum of the IF bandwidth range of chirp 614 defined by the first and second bounding frequencies 615, 616.

The IF bandwidth range and time-frequency planning for the radar system can be defined and implemented to ensure that chirps transmitted from other radar sensors and that reflections of chirps transmitted from other radar sensors do not interfere with the IF bandwidth range of any other chirps. For example, as a first consideration, the IF bandwidth range and time-frequency planning accounts for the roundtrip time of a previous chirp that is received after being reflected from an object 106. The propagation time for a transmitted chirp to travel from a radar sensor to an object 106, reflect off of the object 106, and return to the radar sensor is two times the distance to the object divided by the speed of light, i.e., 2 x (distance to object in meters (m)) / 2.3 x 10⁻⁸ meters per second (m/s). Automotive radar applications are generally configured to detect objects 106 at a maximum range of 300 meters, which corresponds to a roundtrip propagation time of approximately 2 microseconds. While an example of a maximum range of 300 meters is provided for illustration, any other maximum range can also be used in accordance with the present teachings. As such, the IF bandwidth range and the chirp transmit times are configured and implemented such that each frequency of a previous chirp 604 must be separated in time from the IF bandwidth range, i.e., from the second bounding frequency 616, by more than 2 microseconds. In this way, in the example of FIG. 6, reflected frequencies of the previously transmitted chirp 604 will not interfere with the IF bandwidth range of the next chirp 614 since each frequency of chirp 604 is separated from the corresponding frequency of the second bounding frequency 616 by more than 2 microseconds. While the current example is provided with reference to FIG. 6, it is understood that similar considerations apply to the example of FIG. 5 so that reflected frequencies of a transmitted chirp will not interfere with the IF bandwidth range of the other chirps.

As a second consideration, the IF bandwidth range and time-frequency planning can also account for the tolerance and accuracy of the synchronized clocks of the radar sensors of the system. For example, using gPTP to synchronize the clocks of the radar sensors of the system can result in an accuracy to within a predetermined tolerance. For example, the predetermined accuracy of the clocks of the radar sensors of the radar system can be to within 1 microsecond. While 1 microsecond is provided as an illustrative example, any other tolerance/accuracy of the clocks of the radar sensors of the system can be used in accordance with the present teachings. As such, the time-frequency planning of the system also accounts for the 1 microsecond accuracy/tolerance of the clocks of the radar sensors. Adding the 1 microsecond needed to account for the accuracy/tolerance of the clocks to the 2 microseconds needed to account for the roundtrip propagation time of a system having a maximum range of 300m, results in a total of 3 microseconds. As such, the IF bandwidth range and the chirp transmit times are configured and implemented such that each frequency of a previous chirp 604 must be separated in time from the IF bandwidth range, i.e., from the second bounding frequency 616, by more than 3 microseconds. In this way, in the example of FIG. 6, reflected frequencies of the previously transmitted chirp 604 will not interfere with the IF bandwidth range of the next chirp 614, accounting for both the propagation time associated with the maximum range and accounting for the tolerance/accuracy of the clocks of the radar sensors, since each frequency of chirp 604 is separated from the corresponding frequency of the second bounding frequency 616 by more than 3 microseconds. While the current example is provided with reference to FIG. 6, it is understood that similar considerations apply to the example of FIG. 5 so that reflected frequencies of a transmitted chirp will not interfere with the IF bandwidth range of the other chirps.

As a third consideration, the IF bandwidth range and time-frequency planning can also account for the tolerance and accuracy of transmitters of the radar sensors to accurately transmit at the commanded frequency of the chirp. In other words, each transmitter can have an associated known transmit tolerance/accuracy. In such case, the time-frequency planning of the system can also account for the tolerance/accuracy of the transmitters. In automotive applications, the tolerance of the radar transmitters to accurately transmit at a commanded frequency of a chirp can be negligible. The system, however, can nonetheless ensure that the time-frequency planning of the system is implemented and configured to account for the tolerance/accuracy of the transmitters when determining the IF bandwidth range and the first and second bounding frequencies 615, 616. While the current example is provided with reference to FIG. 6, it is understood that similar considerations apply to the example of FIG. 5 so that reflected frequencies of a transmitted chirp will not interfere with the IF bandwidth range of the other chirps.

In this way, the system is configured to listen for received reflected signals within a time period that corresponds to the propagation time of maximum range of the system. Reflected signals received outside of that time period are ignored. For example, the analog-to-digital converter 216 of the radar system 100 can include an analog, anti-aliasing filter configured to ignore received signals outside of the determined received time period. For example, the radar sensors 204, 205 may expect a chirp sample 602, 604 at a certain frequency and at a certain time. As long as the frequency of the received chirp sample 602, 604 is within the expected receive time period, it can be interpreted by the radar system 100 as the expected chirp sample 602, 604. While the current example is provided with reference to FIG. 6, it is understood that similar considerations apply to the example of FIG. 5 so that reflected frequencies of a transmitted chirp will not interfere with the IF bandwidth range of the other chirps.

The foregoing description of the embodiments has been provided for purposes of illustration and description and is not intended to be exhaustive or to limit the disclosure. Individual elements or features of a particular embodiment are generally not limited to that particular embodiment, but, where applicable, are interchangeable and can be used in another embodiment, even if not specifically shown or described. The various embodiments may also be varied in many ways. Such variations are not to be regarded as a departure from the disclosure, and all such modifications are intended to be included within the scope of the disclosure. Although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Example embodiments are provided so that this disclosure will be thorough and will fully convey the scope to those who are skilled in the art. Specific details are set forth, including examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

In the written description and claims, one or more steps within a method may be executed in a different order (or concurrently) without altering the principles of the present disclosure. Similarly, one or more instructions stored in a non-transitory computer-readable medium may be executed in different order (or concurrently) without altering the principles of the present disclosure. Unless indicated otherwise, numbering or other labeling of instructions or method steps is done for convenient reference and not to indicate a fixed order.

Spatial and functional relationships between elements (for example, between modules) are described using various terms, including "connected," "engaged," "interfaced," and "coupled." Unless explicitly described as being "direct," when a relationship between first and second elements is described in the above disclosure, that relationship encompasses a direct relationship where no other intervening elements are present between the first and second elements, and also an indirect relationship where one or more intervening elements are present (either spatially or functionally) between the first and second elements.

The phrase "at least one of A, B, and C" should be construed to mean a logical (A OR B OR C), using a non-exclusive logical OR, and should not be construed to mean "at least one of A, at least one of B, and at least one of C." The term "set" does not necessarily exclude the empty set. The term "non-empty set" may be used to indicate exclusion of the empty set. The term "subset" does not necessarily require a proper subset. In other words, a first subset of a first set may be coextensive with (equal to) the first set.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include processor hardware (shared, dedicated, or group) that executes code and memory hardware (shared, dedicated, or group) that stores code executed by the processor hardware.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2016 (also known as the WIFI wireless networking standard) and IEEE Standard 802.3-2015 (also known as the ETHERNET wired networking standard). Examples of a WPAN are the BLUETOOTH wireless networking standard (including Core Specification versions 3.0, 4.0, 4.1, 4.2, 5.0, and 5.1 from the Bluetooth SIG) from the Bluetooth Special Interest Group (SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

Shared memory hardware encompasses a single memory device that stores some or all code from multiple modules. Group memory hardware encompasses a memory device that, in combination with other memory devices, stores some or all code from one or more modules.

The term memory hardware is a subset of the term computer-readable medium. The term computer-readable medium, as used herein, does not encompass transitory electrical or electromagnetic signals propagating through a medium (such as on a carrier wave); the term computer-readable medium is therefore considered tangible and non-transitory. Non-limiting examples of a non-transitory computer-readable medium are nonvolatile memory devices (such as a flash memory device, an erasable programmable read-only memory device, or a mask read-only memory device), volatile memory devices (such as a static random access memory device or a dynamic random access memory device), magnetic storage media (such as an analog or digital magnetic tape or a hard disk drive), and optical storage media.

The apparatuses and methods described in this application may be partially or fully implemented by a special purpose computer created by configuring a general purpose computer to execute one or more particular functions embodied in computer programs. Such apparatuses and methods may be described as computerized apparatuses and computerized methods. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective C, Swift, Haskell, Go, SQL, R, Lisp, Java^{®}, Fortran, Perl, Pascal, Curl, OCaml, JavaScript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

## Claims

1. A radar system for a vehicle, comprising:
a first radar sensor configured to transmit and receive a first radar signal in a frame;
a second radar sensor configured to transmit and receive a second radar signal in the same frame as the first radar signal;
a processor system coupled to the first and second radar sensor and configured to:
transmit a first plurality of chirps by the first radar sensor and a second plurality of chirps by the second radar sensor, each chirp having a chirp start time, a chirp end time, and a chirp frequency band with a chirp start frequency and a chirp end frequency, wherein each chirp has a different frequency band, and wherein the first plurality of chirps are interleaved with the second plurality of chirps such that for each chirp within the frame:
the chirp start frequency of each of the second plurality of chirps is between the chirp start frequency and chirp end frequency of each of the first plurality of chirps from the first radar,
the chirp end frequency of each of the first plurality of chirps is between the chirp start frequency and chirp end frequency of each of the second plurality of chirps, and
at least a portion of each of the first plurality of chirps is within the same time slot as the second plurality of chirps.

2. The radar system of claim 1, wherein the timing of the first radar sensor and the second radar sensor is synchronized.

3. The radar system of claim 2, wherein the timing of the first radar sensor and the second radar sensor are determined by a timing control mechanism employing Generalized Precision Time Protocol (gPTP) to synchronize the transmission timing of the first plurality of chirps and the second plurality of chirps.

4. The radar system of claim 1, wherein the first radar signal and second radar signal have the same intermediate frequency.

5. The radar system of claim 1, wherein the first radar signal and second radar signal further comprise a stepped frequency pulse waveform **characterized by** a series of pulses, each pulse having a frequency incrementally different from the preceding pulse to cover a predetermined frequency band.

6. The radar system of claim 3, wherein the timing control mechanism maintains a clock accuracy of <1 microsecond between the first radar sensor and the second radar sensor.

7. A method of operating a radar system of a vehicle, comprising:
transmitting a first plurality of chirps by a first radar sensor and a second plurality of chirps by a second radar sensor, each chirp having a chirp start time, a chirp end time, and a chirp frequency band with a chirp start frequency and a chirp end frequency, wherein each chirp has a different frequency band, and wherein the first plurality of chirps are interleaved with the second plurality of chirps such that for each chirp within the frame:
the chirp start frequency of each of the second plurality of chirps is between the chirp start frequency and chirp end frequency of each of the first plurality of chirps from the first radar sensor,
the chirp end frequency of each of the first plurality of chirps is between the chirp start frequency and chirp end frequency of each of the second plurality of chirps, and
at least a portion of each of the first plurality of chirps is within the same time slot as the second plurality of chirps.

8. The method of claim 7, wherein the timing of the first radar sensor and the second radar sensor is synchronized.

9. The method of claim 8, wherein the timing of the first radar sensor and the second radar sensor are determined by a timing control mechanism employing Generalized Precision Time Protocol (gPTP) to synchronize the transmission timing of the first plurality of chirps and the second plurality of chirps.

10. The method of claim 7, wherein the first plurality of chirps and the second plurality of chirps have the same intermediate frequency.

11. The method of claim 7, wherein the first plurality of chirps and the second plurality of chirps further comprise a stepped frequency pulse waveform **characterized by** a series of pulses, each pulse having a frequency incrementally different from the preceding pulse to cover a predetermined frequency band.

12. The method of claim 9, wherein the timing control mechanism maintains a clock accuracy of <1 microsecond between the first radar sensor and the second radar sensor.
